# FASCICULE DE BREVET EUROPEEN

(11) **EP 0 462 872 B1**
(45) Date de publication et mention de la délivrance du brevet: **20.04.1994**
(21) Numéro de dépôt: 91401556.5
(22) Date de dépôt: 12.06.1991
(51) Int. Cl.: A47J 37/06

(54) **Appareil de cuisson à plaques articulées**
Kochgerät mit gelenkig verbundenen Platten
Cooking utensil with articulated plates

(30) Priorité: 20.06.1990 FR 9007710
(43) Date de publication de la demande: 27.12.1991
(73) Titulaire: SEB S.A., F-21260 Selongey (FR)
(72) Inventeur: Coppier, Michel, F-74150 Rumilly (FR)
(74) Mandataire: Keib, Gérard

(56) Documents cités:
- CH-A- 321 814
- FR-A- 2 302 067
- GB-A- 809 858
- US-A- 2 795 182
- US-A- 3 172 999
- US-A- 3 848 110

## Description

La présente invention concerne un appareil de cuisson électrique, notamment pour griller des aliments, comprenant deux plaques de cuisson articulées l'une à l'autre pour déplacer ces plaques entre une position dans laquelle elles sont situées l'une en regard de l'autre et une position dans laquelle elles sont situées dans le prolongement l'une de l'autre pour le montage et l'assemblage.

L'invention s'applique notamment à la cuisson des préparations alimentaires appelées "croque-monsieur"·

Dans ce type d'appareil de cuisson, chaque plaque de cuisson porte un boîtier isolant recouvrant sa face opposée à sa face de cuisson, une résistance électrique de chauffage étant disposée entre chaque plaque et son boîtier.

Dans les réalisations connues, par exemple d'après le FR-A-2 302 067, les plaques de cuisson, pour être suffisamment rigides, sont réalisées par moulage, en fonte ou en aluminium, et les organes qui permettent de les fixer de façon articulée l'une à l'autre sont portés par les plaques elles-mêmes ou par les boîtiers isolants.

Les résistances de chauffage sont soit noyées dans le métal des plaques, soit fixées à celles-ci par des moyens appropriés.

Entre la résistance de chauffage et le boîtier en matière isolante, est généralement disposée une surface réfléchissante, par exemple en tôle, qui permet de réfléchir le rayonnement calorifique vers la plaque de cuisson et d'éviter un échauffement excessif du boîtier.

Dans les réalisations connues, la surface réfléchissante peut, comme dans le FR-A-2 302 067, contribuer à supporter la résistance électrique de chauffage et la plaque de cuisson. Dans ce cas, la surface réfléchissante repose sur un épaulement périphérique du boîtier isolant et comporte une armature de raidissage rapportée.

Une poignée en matière isolante est fixée à chacun des boîtiers, à l'opposé des organes d'articulation, pour permettre d'amener les boîtiers l'un sur l'autre, pour la cuisson simultanée des deux faces du croque-monsieur, ou pour le transport de l'appareil.

Ces appareils de cuisson présentent l'inconvénient d'être coûteux. Le coût élevé de ces appareils est principalement dû au fait que les plaques de cuisson sont réalisées en fonderie. Ce coût est encore grevé par les nombreuses opérations d'assemblage des différents éléments composant l'appareil.

Le but de la présente invention est de remédier aux inconvénients des réalisations connues en créant un appareil à plaques de cuisson qui soit de fabrication simple et peu coûteuse.

L'invention vise ainsi un appareil de cuisson électrique, notamment pour griller des aliments, comprenant deux plaques de cuisson articulées l'une à l'autre pour déplacer ces plaques entre une position dans laquelle elles sont situées l'une en regard de l'autre pour la cuisson et une position dans laquelle elles sont situées dans le prolongement l'une de l'autre pour l'assemblage et deux boîtiers isolants à l'intérieur desquels se trouvent des résistances électriques.

Suivant l'invention, cet appareil de cuisson est caractérisé en ce que chaque plaque de cuisson est réalisée en tôle emboutie et est fixée à une plaque support en tôle formant réflecteur, lesdites plaques de support portant les moyens d'articulation des plaques de cuisson, et en ce que chaque plaque support présente à l'opposé des moyens d'articulation, deux pattes s'étendant au-delà du bord adjacent de la plaque de cuisson et servant à la fixation de poignées en matière isolante, les poignées étant verrouillées par les boîtiers lors du montage.

Le fait que les plaques de cuisson soient réalisées en tôle emboutie au lieu d'être en fonte ou en aluminium coulé, rend l'appareil de cuisson particulièrement économique.

Pour conférer à ces plaques de cuisson en tôle mince, une rigidité suffisante, il est prévu selon une particularité essentielle de l'invention, pour chaque plaque de cuisson, une plaque de support en tôle qui forme réflecteur et en outre porte les moyens d'articulation et les supports de fixation des poignées qui se trouvent verrouillés lors de la mise en place des boîtiers.

Selon une version avantageuse de l'invention, les moyens d'articulation des deux plaques de cuisson sont réalisés d'une seule pièce avec chacune des plaques de support.

La réalisation de ces moyens d'articulation d'une seule pièce, permet de diminuer considérablement le coût de fabrication et de montage.

Selon une version préférée de l'invention, les deux plaques de support sont identiques et interchangeables.

Cette caractéristique permet également d'obtenir des coûts de fabrication peu élevés.

De préférence, chaque plaque de cuisson en tôle emboutie comporte un rebord périphérique replié vers la plaque support, cette dernière comportant sur deux de ses côtés opposés des pattes repliées vers la plaque de cuisson, le rebord de cette plaque de cuisson comportant des zones qui sont fixées par sertissage auxdites pattes repliées de la plaque support.

Les plaques de cuisson et de support sont ainsi rendues solidaires les unes des autres par de simples opérations de sertissage peu coûteuses à réaliser et qui confèrent à l'ensemble une bonne rigidité, malgré l'emploi de tôles relativement minces.

D'autres particularités et avantages de l'invention apparaîtront encore dans la description ci-après.

Aux dessins annexés, donnés à titre d'exemples non limitatifs :
- la figure 1 est une vue en perspective éclatée de l'appareil de cuisson selon l'invention,
- la figure 2 est une vue en plan montrant le dessous d'une plaque de cuisson et d'une plaque support,
- la figure 3 est une vue de côté de l'appareil de cuisson, les plaques de cuisson étant appliquées l'une sur l'autre, les boîtiers isolants et poignées de l'appareil ayant été retirés,
- la figure 4 est une vue suivant IV-IV de la figure 2,
- la figure 5 montre comment les deux plaques de support sont fixées de façon articulée l'une à l'autre.

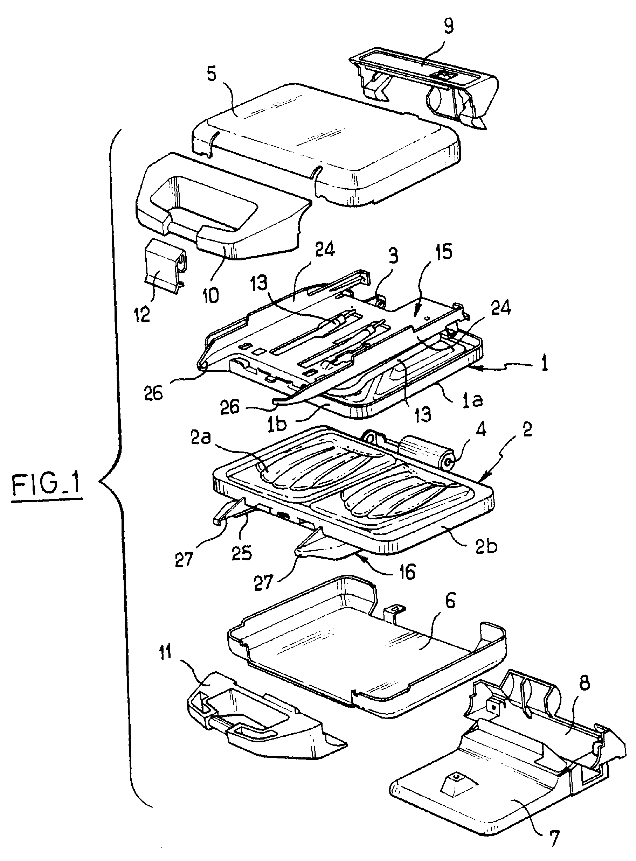

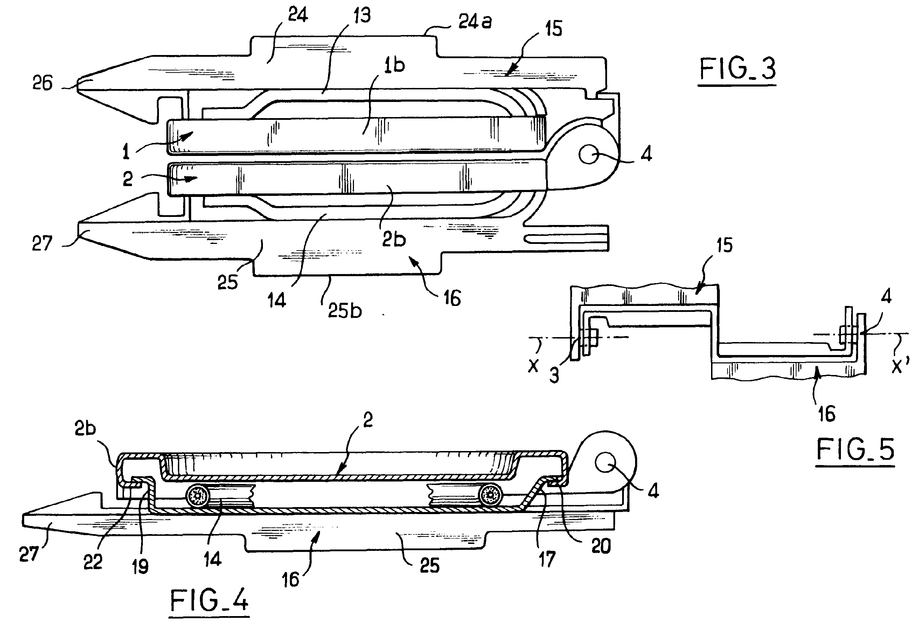

Dans la réalisation de la figure 1, l'appareil de cuisson du type "croque-monsieur" comprend deux plaques de cuisson 1, 2 pouvant être reliées l'une à l'autre par des charnières 3, 4 pour les déplacer entre une position dans laquelle les deux plaques 1, 2 sont l'une contre l'autre, comme indiqué sur la figure 3, et une position non représentée dans laquelle les deux plaques 1, 2 sont à 180° dans le prolongement l'une de l'autre lors du montage. La face de chaque plaque de cuisson 1, 2 opposée à sa face de cuisson 1a, 2a, est destinée à être recouverte par un boîtier 5, 6 en acier peint ou en matière isolante.

Sous le boîtier inférieur 6 est prévu un socle 7 portant un cache 8 destiné à masquer les articulations 3, 4. Un autre cache 9 est prévu au niveau du boîtier supérieur 5. A chaque boîtier 5, 6 correspond une poignée fixée aux plaques support 15 et 16 permettant de déplacer les plaques 1, 2 autour des articulations 3, 4. Une pièce intermédiaire 12 est prévue pour relier les poignées 10, 11 dans la position où les plaques de cuisson 1, 2 sont appliquées l'une contre l'autre.

Par ailleurs, entre chaque plaque de cuisson 1, 2, et le boîtier correspondant s'étend une résistance électrique tubulaire de chauffage 13, 14 (voir également la figure 3).

Conformément à l'invention, chaque plaque de cuisson 1, 2 est réalisée en tôle emboutie et est fixée à une plaque support en tôle 15, 16 formant réflecteur. Chaque résistance de chauffage 13, 14 s'étend entre une plaque de support 15, 16 et la plaque de cuisson 1, 2 adjacente (voir notamment la figure 3).

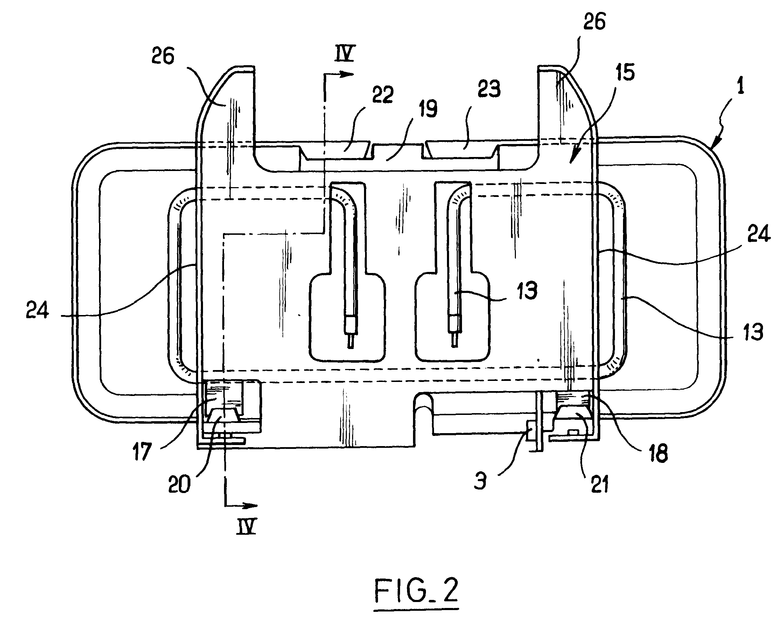

On voit notamment sur les figures 2, 3 et 4, que les moyens d'articulation 3, 4 sont réalisés d'une seule pièce par découpage et emboutissage, avec chacune desdites plaques support 15, 16.

Du reste, comme montré par ces figures, chaque plaque support 15, 16 est réalisée d'une seule pièce, et les deux plaques de cuisson 1, 2 sont identiques et interchangeables.

Comme montré par les figures 1 à 4, chaque plaque de cuisson 1, 2 en tôle emboutie comporte un rebord périphérique 1b, 2b replié vers la plaque support 15 ou 16.

Chaque plaque support 15 ou 16 comporte sur deux de ses côtés opposés, des pattes 17, 18, 19 (voir figures 2 et 4) repliées vers la plaque de cuisson 1 ou 2.

Par ailleurs, le rebord 1b ou 2b de la plaque de cuisson 1 ou 2 comporte des zones 20, 21, 22, 23 qui sont fixées par sertissage aux pattes repliées 17, 18, 19 de la plaque support 15 ou 16.

On voit également, notamment sur la figure 3, que chaque résistance tubulaire de chauffage 13, 14 est prise en sandwich entre la plaque de cuisson 1, 2 et la plaque support 15 ou 16.

D'autre part (voir figures 1 à 4), chaque plaque support 15 ou 16 présente sur deux de ses côtés opposés, un rebord 24, 25 replié à angle droit vers l'extérieur et s'étendant dans une direction perpendiculaire à l'axe d'articulation X-X' des plaques (voir également la figure 5).

Ces deux rebords 24, 25 confèrent une bonne rigidité aux plaques supports 15, 16. Le bord libre 24a, 25b des rebords 24, 25 est destiné à prendre appui contre la paroi des boîtiers 5, 6 et permettent ainsi à ces dernières de résister aux efforts d'écrasement.

Par ailleurs, chaque plaque support 15, 16 présente à l'opposé des moyens d'articulation 3, 4 et dans le prolongement des rebords 24, 25 deux pattes en saillie 26, 27 s'étendant au-delà du bord adjacent de la plaque de cuisson 1, 2. Ces pattes 26, 27 servent à la fixation des poignées en matière isolante 10, 11 et assurent la rigidité de celles-ci.

Dans la réalisation ci-dessus, les plaques de cuisson 1, 2 et les plaques support 15, 16 sont réalisées avantageusement en tôle d'acier mince. La face de cuisson 1a, 2a des plaques de cuisson 1, 2 comporte de préférence un revêtement anti-adhésif, en polytétrafluoréthylène ou en émail chargé d'un pigment foncé tel que du noir de carbone.

Les principaux avantages de l'appareil de cuisson ou de grillage que l'on vient de décrire sont les suivants :

Sa fabrication est très économique du fait que les plaques de cuisson 1, 2 soient en tôle emboutie.

Une telle conception a été rendue possible du fait de l'utilisation de plaques support 15, 16 qui réalisent les fonctions suivantes :
- elles constituent un support rigide des plaques de cuisson en tôle,
- elles jouent le rôle de réflecteurs,
- elles intègrent les articulations
- elles intègrent la fixation des poignées
- elles permettent aux boîtiers isolants de supporter les efforts d'écrasement,
- elles maintiennent les résistances de chauffage.

Du fait de cette pluralité de fonction, le nombre de pièces constituant l'appareil de cuisson est très réduit ainsi que le nombre de points de vissage, ce qui facilite son montage et abaisse considérablement son coût de fabrication.

Bien entendu, l'invention n'est pas limitée à l'exemple de réalisation que l'on vient de décrire et on peut apporter à celui-ci de nombreuses modifications sans sortir du cadre de l'invention.

## Revendications

1. Appareil de cuisson électrique, notamment pour griller des aliments comprenant deux plaques de cuisson (1, 2) articulées l'une à l'autre pour déplacer ces plaques entre une position dans laquelle elles sont situées l'une en regard de l'autre pour la cuisson et une position dans laquelle elles sont situées dans le prolongement l'une de l'autre pour le montage et l'assemblage, chaque plaque de cuisson (1, 2) portant un boîtier (5, 6) recouvrant sa face opposée à sa face de cuisson, une résistance électrique de chauffage (13, 14) étant disposée entre chaque plaque (1, 2) et son boîtier (5, 6), caractérisé en ce que chaque plaque de cuisson (1, 2) est réalisée en tôle emboutie et est fixée à une plaque support (15, 16) en tôle formant réflecteur, lesdites plaques de support (15, 16) portant les moyens d'articulation (3, 4) des plaques de cuisson (1, 2), et en ce que chaque plaque support (15, 16) présente à l'opposé des moyens d'articulation (3, 4), deux pattes (26, 27) s'étendant au-delà du bord adjacent de la plaque de cuisson (1, 2) et servant à la fixation de poignées (10, 11) en matière isolante, les poignées étant verrouillées par les boîtiers 5 et 6 lors du montage.

2. Appareil de cuisson conforme à la revendication 1, caractérisé en ce que lesdits moyens d'articulation (3, 4) sont réalisés d'une seule pièce avec chacune des plaques de support (15, 16).

3. Appareil de cuisson conforme à la revendication 2, caractérisé en ce que chaque plaque support (15, 16) est réalisée d'une seule pièce, sans pièce rapportée.

4. Appareil de cuisson conforme à la revendication 3, caractérisé en ce que les deux plaques de support (15, 16) sont identiques et interchangeables.

5. Appareil de cuisson conforme à l'une des revendications 1 à 4, caractérisé en ce que chaque plaque de cuisson (1, 2) en tôle emboutie comporte un rebord périphérique (1b, 2b) replié vers la plaque support (15, 16), cette dernière comportant sur deux de ses côtés opposés, des pattes (17, 18, 19) repliées vers la plaque de cuisson, le rebord (1b, 2b) de cette plaque de cuisson comportant des zones (20, 21, 22, 23) qui sont fixées par sertissage auxdites pattes repliées (17, 18, 19) de la plaque support.

6. Appareil de cuisson conforme à l'une des revendications 1 à 5, caractérisé en ce que la résistance de chauffage (13, 14) est tubulaire et est prise en sandwich entre la plaque de cuisson (1, 2) et la plaque support (15, 16).

7. Appareil de cuisson conforme à l'une des revendications 1 à 6, caractérisé en ce que chaque plaque support (15, 16) présente sur deux de ses côtés opposés un rebord (24, 25) replié vers l'extérieur et s'étendant dans une direction perpendiculaire à l'axe d'articulation des plaques.

## Patentansprüche

1. Elektrisches Kochgerät, insbesondere zum Grillen von Lebensmitteln, mit zwei Kochplatten (1, 2), die gelenkig miteinander verbunden sind, um diese Platten zwischen einer Position, in der sie sich für den Kochvorgang einander gegenüber befinden, und einer Position, in der sie sich für ihre Montage und ihre Zusammenfügung in ihrer jeweiligen gegenseitigen Verlängerung befinden, verschieben zu können, wobei jede Kochplatte (1, 2) ein Gehäuse (5, 6) trägt, das ihre der Kochseite gegenüberliegende Seite abdeckt und wobei zwischen jeder Platte (1, 2) und ihrem Gehäuse (5, 6) ein elektrischer Heizwiderstand (13, 14) angeordnet ist, dadurch gekennzeichnet, daß jede Kochplatte (1, 2) aus einem gezogenen Blech verwirklicht und an einer einen Reflektor bildenden Halteplatte (15, 16) aus Blech befestigt ist, wobei die Halteplatten (15, 16) die Gelenkmittel (3, 4) für die Kochplatten (1, 2) tragen, und daß jede Halteplatte (15, 16) gegenüber den Gelenkmitteln (3, 4) zwei Fortsätze (26, 27) aufweist, die sich über den angrenzenden Rand der Kochplatte (1, 2) hinaus erstrecken und der Befestigung von Griffen (10, 11) aus isolierendem Material dienen, wobei die Griffe bei der Montage durch die Gehäuse 5 und 6 verriegelt sind.

2. Kochgerät gemäß Anspruch 1, dadurch gekennzeichnet, daß die Gelenkmittel (3, 4) mit jeweils einer der Halteplatten (15, 16) einteilig verwirklicht sind.

3. Kochgerät gemäß Anspruch 2, dadurch gekennzeichnet, daß jede Halteplatte (15, 16) aus einem Stück, ohne angesetztes Teil, verwirklicht ist.

4. Kochgerät gemäß Anspruch 3, dadurch gekennzeichnet, daß die zwei Halteplatten (15, 16) einander gleich und austauschbar sind.

5. Kochgerät gemäß einem der Ansprüche 1 bis 4, dadurch gekennzeichnet, daß jede Kochplatte (1, 2) aus gezogenem Blech eine Umfangskante (1b, 2b) aufweist, die zur Halteplatte (15, 16) umgebogen ist, wobei die letztere an zwei ihrer gegenüberliegenden Seiten Fortsätze (17, 18, 19) aufweist, die zur Kochplatte umgebogen sind, wobei die Kante (1b, 2b) dieser Kochplatte Zonen (20, 21, 22, 23) aufweist, die an den umgebogenen Fortsätzen (17, 18, 19) der Halteplatte durch Verstemmen befestigt sind.

6. Kochgerät gemäß einem der Ansprüche 1 bis 5, dadurch gekennzeichnet, daß der Heizwiderstand (13, 14) röhrenförmig ausgebildet ist und in Sandwich-Anordnung zwischen die Kochplatte (1, 2) und die Halteplatte (15, 16) eingesetzt ist.

7. Kochgerät gemäß einem der Ansprüche 1 bis 6, dadurch gekennzeichnet, daß jede Halteplatte (15, 16) an zwei ihrer einander gegenüberliegenden Seiten eine Kante (24, 25) aufweist, die nach außen umgebogen ist und sich in einer zur Schwenkachse der Platten senkrechten Richtung erstreckt.

## Claims

1. Electric cooking appliance, in particular for toasting food, having two cooking plates (1, 2) hinged together in order to displace said plates between a position in which they are located opposite to each other for the purpose of cooking and a position in which they are located in the line of extension of each other for the purpose of assembly, each cooking plate (1, 2) being adapted to carry a casing (5, 6) which covers the face opposite to its cooking face, an electric heating resistor (13, 14) being disposed between each plate (1, 2) and its casing (5, 6), characterized in that each cooking plate (1, 2) is constructed of die-stamped sheet metal and is attached to a sheet-metal support plate (15, 16) forming a reflector, said support plates (15, 16) being adapted to carry the hinge elements (3, 4) of the cooking plates (1, 2) and wherein each support plate (15, 16) is provided on the side remote from the hinge elements (3, 4) with two lugs (26, 27) extending beyond the adjacent edge of the cooking plate (1, 2) and used for attaching handles (10, 11) of insulating material, the handles being locked in position by the casings (5, 6) at the time of assembly.

2. A cooking appliance according to claim 1, wherein said hinge elements (3, 4) are formed in one piece with each support plate (15, 16).

3. A cooking appliance according to claim 2, wherein each support plate (15, 16) is formed in one piece without any added part.

4. A cooking appliance according to claim 3, wherein the two support plates (15, 16) are identical and interchangeable.

5. A cooking appliance according to any of claims 1 to 4, wherein each cooking plate (1, 2) of die-stamped sheet metal has a peripheral flange (1b, 2b) which is bent-back towards the support plate (15, 16), said support plate being provided on two of its opposite sides with lugs (17, 18, 19) bent-back towards the cooking plate, the flange (1b, 2b) of said cooking plate being provided with zones (20, 21, 22, 23) which are attached by crimping to said bent-back lugs (17, 18, 19) of the support plate.

6. A cooking appliance according to any of claims 1 to 5, wherein the heating resistor (13, 14) is tubular and is sandwiched between the cooking plate (1, 2) and the support plate (15, 16).

7. A cooking applicance according to any of claims 1 to 6, wherein each support plate (15, 16) is provided on two of its opposite sides with an outwardly bent flange (24, 25) which extends in a direction perpendicular to the axis of articulation of the plates.
